# EUROPEAN PATENT SPECIFICATION

(11) **EP 2 445 269 B1**
(45) Date of publication and mention of the grant of the patent: **25.09.2019**
(21) Application number: 10801974.6
(22) Date of filing: 23.07.2010
(51) Int. Cl.: H04W 52/02, H04W 88/10

(54) **METHOD AND DEVICE FOR CONTROLLING ENERGY SAVING OF INTER-RAT BASE STATION**
VERFAHREN UND VORRICHTUNG ZUM STEUERN DER ENERGIEEINSPARUNG EINER ZWISCHEN-RAT-BASISSTATION
PROCÉDÉ ET DISPOSITIF DE COMMANDE D'ÉCONOMIE D'ÉNERGIE DE STATION DE BASE INTER-RAT (TECHNOLOGIE D'ACCÈS RADIO)

(30) Priority: 23.07.2009 CN 200910089783
(43) Date of publication of application: 25.04.2012
(73) Proprietor: ZTE Corporation, Shenzhen, Guangdong 518057 (CN)
(72) Inventor: ZHAO, Jie, Shenzhen Guangdong 518057 (CN); GAO, Yin, Shenzhen Guangdong 518057 (CN)
(74) Representative: Aipex B.V.
(86) International application number: PCT/CN2010/075439
(87) International publication number: WO 2011/009415

(56) References cited:
- EP-A1- 2 117 279
- EP-A1- 2 371 168
- WO-A1-02/07464
- CN-A- 101 047 578
- CN-A- 101 179 814
- CN-A- 101 483 887
- DE-A1-102007 057 607

## Description

### Technical Field

The present invention relates to the technology of energy savings control of a base station, and in particular, to a method and an apparatus for energy savings control of inter-RAT base station.

### Background of the Related Art

Now the telecommunication industry gradually enters into the meager profit stage, and the telecom operators pay more and more attention to the cost cutting link such as energy savings, etc., while seeking for enlarging the market share and increasing the earning by the business types. The base station, as a large energy consumer of the operator, is a key network element for energy savings. Meanwhile, the ordinary household pays more and more attention to the problem that the electromagnetic wave radiation pollution exists in the base station in the work status.

The technical scheme for implementing the energy savings of the base station now is mainly by means of adopting new energy savings and environmental protection devices and modifying the heat dissipation material, so as to reduce the power consumption of the base station and meanwhile reduce the power consumption produced by the heat dissipation. However, the following problems existing in that technology is that: adopting this kind of apparatuss increases the manufacturing cost of the base station, and meanwhile a number of base stations which do not adopt this kind of devices still cannot achieve the purpose of energy savings.

The self organizing network (SON) is a key objective of the long term evolution (LTE) system radio access network (RAN). The functions of the SON include self configuring and self optimizing, etc.

Due to a number of mature networks, such as 2G, 3G, etc., existing in the operators, it is relatively usual that various formats exist at the same time when networking practically. Therefore, the energy savings of the inter-radio access technology (RAT) is an important aspect of energy savings of the base station.

Now, there is no technical scheme of energy savings of the base station based on the inter-RAT. The problem of energy savings of the base station in the multi-system covering network is not paid the relevant attention yet.

DE 10 2007 057607 A1 relates to a method for operating a mobile communications network having two or more supply levels (1, 2, 3), wherein the supply levels (1, 2, 3) overlap and are each formed by a plurality of transmission stations.

### Content of the Invention

On that basis, the main object of the present invention is to provide a method and an apparatus for energy savings control of an inter-RAT base station, which can effectively implement the energy savings of the inter-RAT base station without affecting the user access in the system.

The above problem is solved by a method for energy savings control of an inter-RAT base station according to claim 1, and an apparatus for energy savings control of an inter-RAT base station in a local system according to claim 8.

Also provided is a method for energy savings control of an inter-RAT base station comprises:
obtaining status information of a foreign system cell, performing an energy savings control judgment according to the status information of the foreign system cell and the status information of a local system cell which covers the same or neighboring area with the foreign system cell, and waking up the foreign system cell or the local system cell or making the foreign system cell or the local system cell hibernate according to a judgment result.

Preferably, the obtaining the status information of the foreign system cell comprises:
the local system sending an inter-RAT cell information request message to the foreign system, and obtaining the status information of the foreign system cell from a received inter-RAT cell information response message of the foreign system.

Preferably, the inter-RAT cell information request message and the inter-RAT cell information response message are newly set dedicated messages;
or, the inter-RAT cell information request message and the inter-RAT cell information response message are carried by a base station direct information transfer (eNB DIRECT INFORMATION TRANSFER) message and a mobility management entity (MME) direct information transfer (MME DIRECT INFORMATION TRANSFER) message between the base station and the MME respectively, or carried by a base station configuration transfer (eNB CONFIGURATION TRANSFER) message and an MME configuration transfer (MME CONFIGURATION TRANSFER) message respectively;
or, the inter-RAT cell information request message and the inter-RAT cell information response message are carried by a direct information transfer (DIRECT INFORMATION TRANSFER) message between a base station controller and a core network.

Preferably, the obtaining the status information of the foreign system cell comprises:
extracting the status information of the foreign system cell after receiving an inter-RAT cell information update message sent by the foreign system.

Preferably, the inter-RAT cell information update message is newly set dedicated message respectively;
or, the inter-RAT cell information update message is carried by an MME DIRECT INFORMATION TRANSFER message or an MME CONFIGURATION TRANSFER message between the base station and the MME;
or, the inter-RAT cell information update message is carried by a DIRECT INFORMATION TRANSFER message between a base station controller and a core network.

Preferably, the status information of the cell comprises load situation of the cell, whether to be in an energy savings status and an energy savings status corresponding to a set time period.

Preferably, the performing the energy savings control judgment comprises:
judging that the local system cell enters into a hibernation status when determining that the local system cell is in a hibernation time period, the load of the foreign system cell which covers the same or neighboring area with the local system cell is not overloaded and the foreign system cell is not in the energy savings status;
or, judging to wake up the foreign system cell when determining that the load of the local system cell is overloaded and the foreign system cell which covers the same or neighboring area with the local system cell is in the hibernation status;
or, judging to wake up the local system cell when determining that the load of the foreign system cell which covers the same or neighboring area with the local system cell is overloaded and the local system cell is in the hibernation status.

Preferably, the waking up the foreign system cell according to the judgment result comprises:
the local system sending an inter-RAT cell waking up request message to the foreign system, determining that the foreign system cell is woke up from a received inter-RAT cell waking up response message of the foreign system, and obtaining the status information of the foreign system cell.

Preferably, the inter-RAT cell waking up request message and the inter-RAT cell waking up response message are newly set dedicated messages respectively;
or, the inter-RAT cell waking up request message and the inter-RAT cell waking up response message are carried by an eNB DIRECT INFORMATION TRANSFER message and an MME DIRECT INFORMATION TRANSFER message between the base station and the MME respectively, or carried by an eNB CONFIGURATION TRANSFER message and an MME CONFIGURATION TRANSFER message respectively;
or, the inter-RAT cell waking up request message and the inter-RAT cell waking up response message are carried by a DIRECT INFORMATION TRANSFER message between a base station controller and a core network.

Also provided is an apparatus for energy savings control of an inter-RAT base station comprises:
an obtaining unit, configured to obtain status information of a foreign system cell;
a judgment unit, configured to perform an energy savings control judgment according to the status information of the foreign system cell and the status information of a local system cell which covers the same or neighboring area with the foreign system cell; and
an execution unit, configured to wake up the foreign system cell or the local system cell or making the foreign system cell or the local system cell hibernate according to a judgment result of the judgment unit.

Preferably, the obtaining unit comprises:
a sending module, configured to send an inter-RAT cell information request message to the foreign system
a receiving module, configured to receive an inter-RAT cell information response message of the foreign system; and
an obtaining module, configured to obtain the status information of the foreign system cell.

Preferably, the inter-RAT cell information request message and the inter-RAT cell information response message are newly set dedicated messages;
or, the inter-RAT cell information request message and the inter-RAT cell information response message are carried by an eNB DIRECT INFORMATION TRANSFER message and a mobility management entity (MME) DIRECT INFORMATION TRANSFER message between the base station and the MME respectively, or carried by an eNB CONFIGURATION TRANSFER message and an MME CONFIGURATION TRANSFER message respectively;
or, the inter-RAT cell information request message and the inter-RAT cell information response message are carried by a DIRECT INFORMATION TRANSFER message between a base station controller and a core network.

Preferably, the obtaining unit comprises:
a receiving module, configured to receive an inter-RAT cell information update message sent by the foreign system; and
an obtaining module, configured to obtain the status information of the foreign system cell.

Preferably, the inter-RAT cell information update message is newly set dedicated message respectively;
or, the inter-RAT cell information update message is carried by an MME DIRECT INFORMATION TRANSFER message or an MME CONFIGURATION TRANSFER message between the base station and the MME;
or, the inter-RAT cell information update message is carried by a DIRECT INFORMATION TRANSFER message between a base station controller and a core network.

Preferably, the status information of the cell comprises load situation of the cell, whether to be in an energy savings status and an energy savings status corresponding to a set time period.

Preferably, the judgment unit performs the energy savings control judgment, and comprises:
judging that the local system cell enters into a hibernation status when determining that the local system cell is in a hibernation time period, the load of the foreign system cell which covers the same or neighboring area with the local system cell is not overloaded and the foreign system cell is not in the energy savings status;
or, judging to wake up the foreign system cell when determining that the load of the local system cell is overloaded and the foreign system cell which covers the same or neighboring area with the local system cell is in the hibernation status;
or, judging to wake up the local system cell when determining that the load of the foreign system cell which covers the same or neighboring area with the local system cell is overloaded and the local system cell is in the hibernation status.

Preferably, the execution unit comprises:
a sending module, configured to send an inter-RAT cell waking up request message to the foreign system;
a receiving module, configured to receive an inter-RAT cell waking up response message of the foreign system; and
a determination and obtaining module, configured to determine that the foreign system cell is woke up and obtain the status information of the foreign system cell.

Preferably, the inter-RAT cell waking up request message and the inter-RAT cell waking up response message are newly set dedicated messages respectively;
or, the inter-RAT cell waking up request message and the inter-RAT cell waking up response message are carried by an eNB DIRECT INFORMATION TRANSFER message and an MME DIRECT INFORMATION TRANSFER message between the base station and the MME respectively, or carried by an eNB CONFIGURATION TRANSFER message and an MME CONFIGURATION TRANSFER message respectively;
or, the inter-RAT cell waking up request message and the inter-RAT cell waking up response message are carried by a DIRECT INFORMATION TRANSFER message between a base station controller and a core network.

The present invention performs the energy savings control judgment of the base station according to the status information of the cell in a local system and by obtaining the status information of the cell in a foreign system, and implements that the base station cell is woke up or entered into a hibernation status by the corresponding energy savings control indication. Here, the status information of the foreign system cell is obtained through newly set inter-RAT cell information request message and the inter-RAT cell information response message, or the indication information of the status information of the foreign system cell is carried and obtained through the existing messages between the base station and a mobility management entity (MME), thereby obtaining the status information of the foreign system cell; obtaining the status information of the system cell can be implemented also through interactive messages between a base station controller and a core network. The present invention will control the cell to enter into the hibernation status when determining the cell should enter into the hibernation status, and wake up the corresponding cell when there are more access users, thereby implementing the energy savings of the base station as much as possible, and the implementation is simple and practical.

### Brief Description of Drawings

FIG. 1 is a flow chart of a method for energy savings control of an inter-RAT base station according to a first embodiment of the present invention;
FIG. 2 is a flow chart of a method for energy savings control of an inter-RAT base station according to a second embodiment of the present invention;
FIG. 3 is a flow chart of a method for energy savings control of an inter-RAT base station according to a third embodiment of the present invention;
FIG. 4 is a structure diagram of an apparatus for energy savings control of an inter-RAT base station of the present invention;
FIG. 5 is a structure diagram of an obtaining unit of the present invention;
FIG. 6 is another structure diagram of an obtaining unit of the present invention; and
FIG. 7 is a structure diagram of an execution unit of the present invention.

### Preferred Embodiments of the Present Invention

The basic idea of the present invention is: performing an energy savings control judgment of the base station according to the status information of the cell in a local system and by obtaining the status information of the cell in a foreign system, and implementing that the base station cell is woke up or entered into a hibernation status by the corresponding energy savings control indication. Here, the status information of the foreign system cell is obtained through newly set inter-RAT cell information request message and the inter-RAT cell information response message, or the indication information of the status information of the foreign system cell is carried and obtained through the existing messages between the base station and a mobility management entity (MME), thereby obtaining the status information of the foreign system cell; obtaining the status information of the system cell can be implemented also through interactive messages between a base station controller and a core network. The present invention will control the cell to enter into the hibernation status when determining the cell should enter into the hibernation status, and wake up the corresponding cell when there are more access users, thereby implementing the energy savings of the base station as much as possible, and the implementation is simple and practical.

In order to make the object, the technical scheme and advantages of the present invention more clear, the present invention is described in detail with reference to the accompanying drawings and in combination with embodiments hereinafter.

### Embodiment 1

In this embodiment, the judgment algorithm of inter-RAT energy savings control is comprehensively judged according to the current time period, the energy savings status of the local system cell, the load situation and the energy savings status of the foreign system cell; the inter-RAT cell information request (INTER-RAT CELL INFO REQUEST) message is used to carry the inter-RAT cell information request; the inter-RAT cell information response (INTER-RAT CELL INFO RESPONSE) message is used to represent that the process is successful; the inter-RAT cell information failure (INTER-RAT CELL INFO FAILURE) message is used to represent that the process fails; the inter-RAT cell information update (INTER RAT CELL INFO UPDATE) message is used to represent that the inter-RAT cell information is updated; the inter-RAT energy savings control indication (INTER-RAT ENERGY SAVINGS INDICATION) message is used to carry the inter-RAT energy savings control indication; the inter-RAT energy savings control response (INTER-RAT ENERGY SAVINGS RESPONSE) message is used to represent that the process is successful; the inter-RAT energy savings control failure (INTER-RAT ENERGY SAVINGS FAILURE) message to represent that the process fails. It should be illustrated that all the above messages are newly set message bodies to implement the technical scheme of the present invention, and the message formats of the above messages are not limited, as long as they include the above corresponding information.

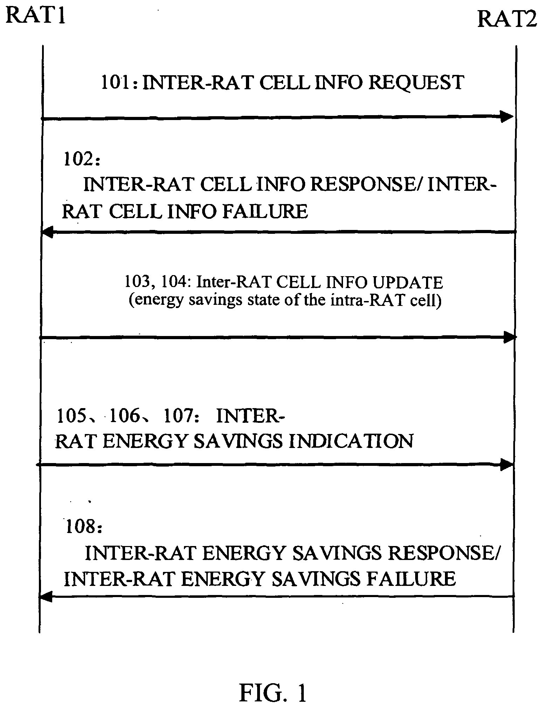

FIG. 1 is a flow chart of a method for energy savings control of an inter-RAT base station according to a first embodiment of the present invention. As shown in FIG. 1, the method for energy savings control of the inter-RAT base station in this embodiment includes the following steps:
step 101, obtain the information of the inter-RAT cell: the status information such as the energy savings status (whether to be in the energy savings status) and the load situation, etc.; the RAT1 initiates the INTER-RAT CELL INFO REQUEST message to the RAT2 for requesting the information of the inter-RAT cell.
Step 102, if the process is successful, the RAT2 returns the INTER-RAT CELL INFO RESPONSE message to the RAT1 for carrying the requested information of the cell: the status information such as the energy savings status (whether to be in the energy savings status) and the load situation, etc.; and if the process fails, the RAT2 returns the INTER-RAT CELL INFO FAILURE message to the RAT1.
Step 103, after the energy savings status of the RAT1 cell changes, the INTER-RAT CELL INFO UPDATE is sent for transferring the energy savings status of the local system cell to the foreign system RAT2.
Step 104, after the RAT2 receives the INTER-RAT CELL INFO UPDATE, the status information of the RAT1 cell (energy savings status of the cell, etc.) is updated and stored.
Step 105, the RAT1 performs the energy savings control judgment periodically, and the energy savings control judgment is comprehensively performed according to the time period, the energy savings status of the local system cell, the load situation and the energy savings status of the foreign system cell; for example, the conditions of entering into the energy savings status are that: (1) the cell enters into the hibernation status in the time period of 22:00∼7:00 every day, while recovers to the work status in other time periods; (2) the load of the foreign system cell is not overloaded; (3) the foreign system cell does not in the energy savings status. When the RAT1 judges that all the above conditions are satisfied, the local system cell is caused to enter into the energy savings status: performing the hibernation energy savings process of the local system cell, that is, making the local system cell hibernate, and reducing the pilot frequency channel power of carriers of the cell to 0 or turning off the carriers to enter into the energy savings status.
Step 106, the RAT1 performs the energy savings control judgment periodically, and the energy savings control judgment is comprehensively performed according to the current time period, the energy savings status of the local system cell, the load situation and the energy savings status of the foreign system cell; and when the RAT1 judges that the conditions of waking up the local system cell are satisfied, the waking up recovery process of the local system cell is performed, for example, when it is determined that the load of the foreign system cell which covers the same or neighboring area with the local system cell is overloaded and the local system cell is in the hibernation status, it judges to wake up the local system cell. The pilot frequency channel power of the carriers of the cell is recovered to a work status value, and the cell exits the energy savings status.
   The method for hibernating or waking up the local system cell refers to the patent application document, the application number of which is 200910137213.8, entitled "Method and apparatus for controlling carrier power" and filed on April 23, 2009, applied in China by the present applicant.
Step 107, the RAT1 performs the energy savings control judgment periodically, the energy savings control judgment is comprehensively performed according to the current time period, the energy savings status of the local system cell, the load situation and the energy savings status of the foreign system cell; after the RAT1 judges that it requires to wake up the foreign system cell, if the local system cell is in the work status and overloaded seriously, and the neighboring cell of the foreign system is in the energy savings status, the INTER-RAT ENERGY SAVINGS INDICATION message (wherein, the message can include the neighboring cell id of the foreign system and the energy savings control indication: walking up the cell) is sent to the RAT2 for requesting to wake up the RAT2 cell. The base station in the RAT2 recovers the pilot frequency channel power of the carriers of the cell to the work status value, and exits the energy savings status.
Step 108, after the RAT2 receives the INTER-RAT ENERGY SAVINGS INDICATION message, the waking up recovery of the local system cell is performed; if the process is successful, the INTER-RAT ENERGY SAVINGS RESPONSE is returned to the RAT1; and if the process fails, the INTER-RAT ENERGY SAVINGS FAILURE is returned to the RAT2, and the failure message can include the failure cause.

### Embodiment 2

In this embodiment, the two messages, eNB DIRECT INFORMATION TRANSFER and MME DIRECT INFORMATION TRANSFER, of the S1 interface are extended, information elements are added in the messages to represent the inter-RAT cell information update, and here the function also can be implemented by newly structuring the similar messages; the two messages, eNB CONFIGURATION TRANSFER and MME CONFIGURATION TRANSFER, of the S1 interface are extended, the information elements are added in the messages to represent the inter-RAT cell information request, the inter-RAT cell information response and the inter-RAT cell information failure response, and here the function also can be implemented by newly structuring the similar messages; the two messages, eNB CONFIGURATION TRANSFER and MME CONFIGURATION TRANSFER, of the S1 interface are extended, the information elements are added in the messages to represent the inter-RAT cell energy savings control indication, the inter-RAT energy savings control response, the inter-RAT energy savings control failure response, and here the function also can be implemented by newly structuring the similar messages;
the modifications referring to the 36.413 protocol messages are shown as table 1 to table 6 respectively. Wherein, the bold italic parts and the parts with underline are the newly added information element parts; table 1 is the cell identity type message, table 2 is the inter-system information transfer type message, table 3 is the SON configuration transfer message, table 4 is the SON information message, table 5 is the SON information reply message, and table 6 is the failure cause message.

**Table 1**

| **IE/Group Name** | **Range** | **IE type and reference** |
|---|---|---|
| ***Choice Source CI Type*** | | |
| ***>GERAN-Cell-ID*** | | |
| *>>**LAI*** | | ***9.2.3.1*** |
| ***>>RAC*** | | ***9.2.3.2*** |
| **>>*CI*** | | ***OCTET STRING (2)*** |
| ***>UNTRAN-Cell-ID*** | | |
| ***>>PLMN identity*** | | ***9.2.3.8*** |
| ***>>CI*** | | ***OCTET STRING (2)*** |
| ***>E-UTRANCGI*** | | ***9.2.1.38*** |

**Table 2**

| **IE/Group Name** | **Range** | **IE type and reference** |
|---|---|---|
| Choice **Inter-system Information Transfer Type** | | |
| >RIM Transfer | | 9.2.3.23 |
| ***>inter-RAT cell info*** | | |
| ***>>cell energy savings status*** | | ***ENUMERATED* (** |
| | | ***Energy savings status.*** |
| | | ***Normal work status)*** |
| ***>> Cell Identity*** | | ***9.2.1.X1*** |

**Table 3**

| **IE/Group Name** | **Range** | **IE type and reference** |
|---|---|---|
| **SON Configuration Transfer** | | |
| >***Target CI*** | | ***9.2.1.X1*** |
| **> *Source CI*** | | ***9.2.1.X1*** |
| >SON Information | | 9.2.3.27 |

**Table 4**

| **IE/Group Name** | **Range** | **IE type and reference** |
|---|---|---|
| Choice **SON Information** | | |
| **>SON Information Request** | | ENUMERATED (X2 TNL Configuration Info TNL |
| | | ***inter-RAT cell info req,*** |
| | | ***inter-RAT energy savings indication,*** |
| | | **...)** |
| >**SON Information Reply** | | 9.2.3.28 |

**Table 5**

| **IE/Group Name** | **Range** | **IE type and reference** |
|---|---|---|
| **SON Information Reply** | | |
| >X2 TNLConfigurationInfo | | 9.2.1.29 |
| >***inter-RAT cell info rsp*** | | |
| **>>*cell energy savings status*** | | ***ENUMERATED* (** |
| | | ***Energy savings status*** |
| | | ***Normal work status)*** |
| **>>*Cause*** | | ***9.2.1.3*** |
| **>*inter-RAT energy savings rsp*** | | |
| **>>*cell energy savings status*** | | ***ENUMERATED (*** |
| | | ***Energy savings status,*** |
| | | ***Normal work status)*** |
| **>>*Cause*** | | ***9.2.1.3*** |

**Table 6**

| **IE/Group Name** | **Range** | **IE Type and Reference** |
|---|---|---|
| CHOICE *Cause Group* | | |
| >*Radio Network Layer* | | |
| >>Radio Network | | ENUMERATED |
| Layer Cause | | (... |
| | | ***inter-RAT cellinfofailure.*** |
| | | ***inter-RAT energy savings failure*** |
| | | ...) |

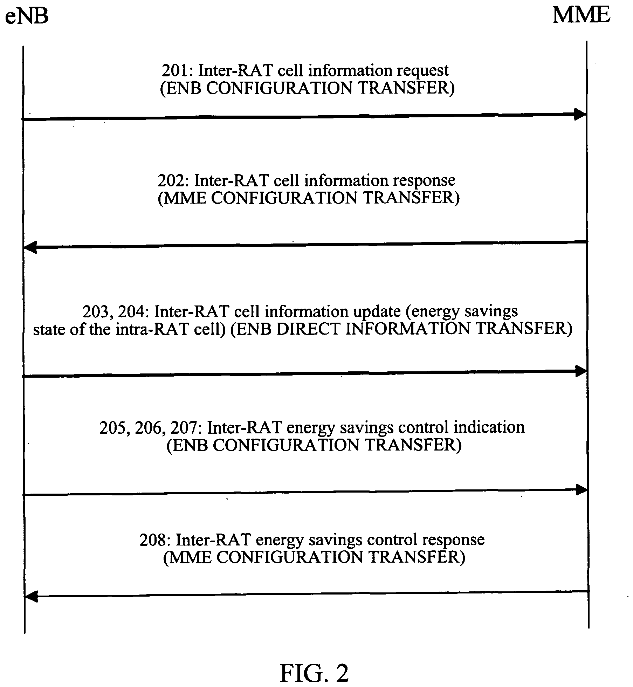

FIG. 2 is a flow diagram of a method for energy savings control of an inter-RAT base station according to a second embodiment of the present invention. As shown in FIG. 2, the method for energy savings control of the inter-RAT base station in this embodiment includes the following steps:
step 201, obtain the information of the inter-RAT cell: the energy savings status (whether to be in the energy savings status), etc.; the RAT1 sends the CONFIGURATION TRANSFER message of the S1 interface to the RAT2, and the content of the information element SON Information Request is the inter-RAT cell info req, for requesting the information of the inter-RAT cell.
Step 202, after the RAT2 receives the CONFIGURATION TRANSFER message, the RAT2 returns the CONFIGURATION TRANSFER message carrying the information element SON Information Reply to the RAT1; if the process is successful, the information element SON Information Reply carries the requested cell energy savings status; and if the process fails, the information element SON Information Reply carries the failue cause: Cause.
Step 203, after the cell energy savings status of the RAT1 changes, the Direct Information Transfer message (wherein, the content of the information element Inter-system Information Transfer Type is: the inter-RAT cell info) is sent, for transferring the cell energy savings status of the local system to the foreign system RAT2.
Step 204, after the RAT2 receives the Direct Information Transfer message, the stored status information of the RAT1 cell (the cell energy savings status, etc.) is updated.
Step 205, the RAT1 performs the energy savings control judgment periodically, the energy savings control judgment is comprehensively performed according to the time period, the energy savings status of the local system cell, the load situation and the energy savings status of the foreign system cell; for example, the conditions of entering into the energy savings status include the following items, thereby entering into the energy savings status when all conditions are satisfied: (1) the cell enters into the hibernation status in the time period of 22:00-7:00 every day, while recovers to the work status in other time periods; (2) the load of the foreign system cell is not overloaded; (3) the foreign system cell does not in the energy savings status; when the RAT1 judges that the conditions of the cell hibernation in the local system are satisfied, the hibernation energy savings process of the local system cell is performed;
step 206, the RAT1 performs the energy savings control judgment periodically, and the energy savings control judgment is comprehensively performed according to the current time period, the energy savings status of the local system cell, the load situation and the energy savings status of the foreign system cell; and when the RAT1 judges that the conditions of waking up the local system cell are satisfied, the waking up recovery process of the local system cell is performed;
step 207, the RAT1 performs the energy savings control judgment periodically, the energy savings control judgment is comprehensively performed according to the time period, the energy savings status of the local system cell, the load situation and the energy savings status of the foreign system cell; after the RAT1 judges that it requires to wake up the foreign system cell, if the local system cell is in the work status and overloaded seriously, and the neighboring cell of the foreign system is in the energy savings status, the CONFIGURATION TRANSFER message (carrying the inter-RAT cell waking up indication, and the content of the information element SON Information Request is: the inter-RAT energy savings indication) is sent to the RAT2, for requesting to wake up the RAT2 cell;
step 208, after the RAT2 receives the CONFIGURATION TRANSFER message, the waking up recovery of the local system cell is performed; the RAT2 returns the CONFIGURATION TRANSFER carrying the information element SON Information Reply to the RAT1; if the process is successful, the information element SON Information Reply carries the processed cell energy savings status; if the process fails, the information element SON Information Reply carries the failure cause: Cause.

It should be illustrated that the message formats in the above table 1 to table 6 are only exemplary illustration, and other functions can also be set for the messages in the above table 1 to table 6, for example, the CONFIGURATION TRANSFER message also can carry the indication information that the inter-RAT cell energy savings status changes, etc.

### Embodiment 3

In this embodiment, the messages, DIRECT INFORMATION TRANSFER (RNC, CN), of the Iu interface are extended, the information elements are added in the messages to represent the inter-RAT cell information update, and here the function also can be implemented by newly structuring the similar messages; the messages, DIRECT INFORMATION TRANSFER (RNC, CN), of the Iu interface are extended, the information elements are added in the messages to represent the inter-RAT cell information request, the inter-RAT cell information response and the inter-RAT cell information failure response, and here the function also can be implemented by newly structuring the similar messages; the messages, DIRECT INFORMATION TRANSFER (RNC, CN), of the Iu interface are extended, the information elements are added in the messages to represent the inter-RAT cell energy savings control indication, the inter-RAT energy savings control response and the inter-RAT energy savings control failure response, and here the function also can be implemented by newly structuring the similar messages.

The modifications referring to the 25.413 protocol messages are shown as table 7 to table 12 respectively, wherein, the bold italic parts and the parts with underline are the newly added network element parts; table 7 is the inter-system information transfer type message, table 8 is the cell identity type message, table 9 is the SON configuration transfer message, table 10 is the SON information message, table 11 is the SON information reply message, and table 12 is the failure cause message.

**Table 7**

| **IE/Group Name** | Range | **IE type and reference** |
|---|---|---|
| Choice **Inter-system Information** | | |
| **Transfer Type** | | |
| >RIM Transfer | | 9.2.3.30 |
| **>*inter-RAT cell info*** | | |
| **>>*cell energy savings status*** | | ***ENUMERATED (*** |
| | | ***Energy savings status,*** |
| | | ***Normal work status)*** |
| **>> *Cell Identity*** | | ***9.2.1.X1*** |
| **> *SON Configuration Transfer*** | | ***9.2.1.X2*** |

**Table 8**

| **IE/Group Name** | Range | **IE type and reference** |
|---|---|---|
| ***Choice Source CI Type*** | | |
| ***>GERAN-Cell-ID*** | | |
| **>>*LAI*** | | ***9.2.3.6*** |
| **>>*RAC*** | | ***9.2.3.7*** |
| **>>*CI*** | | ***OCTET STRING (2)*** |
| **>*UNTRAN-Cell-ID*** | | |
| **>>*PLMN identity*** | | ***9.2.3.8*** |
| **>>*CI*** | | ***OCTETSTRING (2)*** |
| ***> E-UTRANCGI*** | | ***9.2.1.38*** |

**Table 9**

| **IE/Group Name** | Range | **IE type and reference** |
|---|---|---|
| ***SON Configuration Transfer*** | | |
| **>*Target CI*** | | ***9.2.1.X1*** |
| **> *Source CI*** | | ***9.2.1.X1*** |
| **>*SON Information*** | | ***9.2.1.X3*** |

**Table 10**

| IE/Group Name | Range | IE type and reference |
|---|---|---|
| ***Choice SON Information*** | | |
| >*SON Information* *Request* | | *ENUMERATED (* |
| | | ***inter-RAT cell*** *info req,* |
| | | *inter-RAT energy savings indication,* |
| | | ...*)* |
| >*SON Information* *Reply* | | *9.2.1.X4* |

**Table 11**

| **IE/Group Name** | Range | **IE type and reference** |
|---|---|---|
| **SON Information Reply** | | |
| **>*inter-RAT cell* *info rsp*** | | |
| **>>*cell energy savings status*** | | ***ENUMERATED* (** |
| | | ***Energy savings status.*** |
| | | ***Normal work status)*** |
| **>>*Cause*** | | ***9.2.1.4*** |
| >***inter-RAT energy savings*** ***rsp*** | | |
| **>>*cell energy savings status*** | | ***ENUMERATED* (** |
| | | ***Energy savings status.*** |
| | | ***Normal work status)*** |
| **>>*Cause*** | | ***9.2.1.4*** |

**Table 12**

| **IE/Group Name** | **Range** | **IE Type and Reference** |
|---|---|---|
| CHOICE *Cause Group* | | |
| *>Radio Network* | | |
| *Layer* | | |
| >>Radio Network | | ENUMERATED |
| Layer Cause | | (... |
| | | ***inter-RAT cell info failure.*** |
| | | ***inter-RAT energy savings failure*** |
| | | ...) |

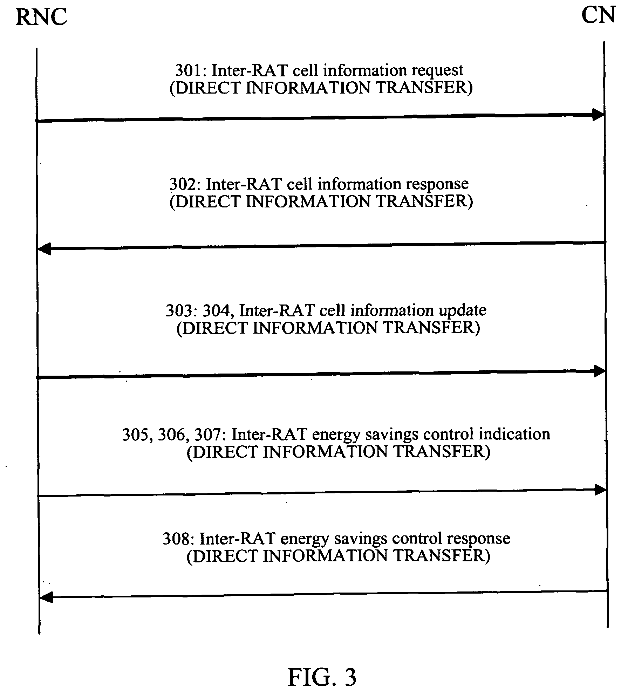

FIG. 3 is a flow diagram of a method for energy savings control of an inter-RAT base station according to a third embodiment of the present invention. As shown in FIG. 3, the method for energy savings control of the inter-RAT base station in this embodiment includes the following steps:
step 301, obtain the information of the inter-RAT cell: the energy savings status (whether to be in the energy savings status), etc.; the RAT1 sends the DIRECT INFORMATION TRANSFER message of the Iu interface to the RAT2, and the content of the information element SON Information Request is the inter-RAT cell info req, for requesting the information of the inter-RAT cell.
Step 302, after the RAT2 receives the DIRECT INFORMATION TRANSFER message, the RAT2 returns the DIRECT INFORMATION TRANSFER message carrying the information element SON Information Reply to the RAT1; if the process is successful, the information element SON Information Reply carries the requested cell energy savings status; and if the process fails, the information element SON Information Reply carries the failure cause: Cause.
Step 303, after the cell energy savings status of the RAT1 changes, the DIRECT INFORMATION TRANSFER message (the content of the information element Inter-system Information Transfer Type is: the inter-RAT cell info) is sent, for transferring the cell energy savings status of the local system to the foreign system RAT2.
Step 304, after the RAT2 receives the DIRECT INFORMATION TRANSFER, the stored status information of the RAT1 cell (cell energy savings status, etc.) is updated.
Step 305, the RAT1 performs the energy savings control judgment periodically, the energy savings control judgment is comprehensively performed according to the time period, the energy savings status of the local system cell, the load situation and the energy savings status of the foreign system cell; for example, the conditions of entering into the energy savings status include the following items, thereby entering into the energy savings status when all conditions are satisfied: (1) the cell enters into the hibernation status in the time period of 22:00-7:00 every day, while recovers to the work status in other time periods; (2) the load of the foreign system cell is not overloaded; (3) the foreign system cell does not in the energy savings status; when the RAT1 judges that the conditions of the cell hibernation in the local system are satisfied, the hibernation energy savings process of the local system cell is performed.
Step 306, the RAT1 performs the energy savings control judgment periodically, and the energy savings control judgment is comprehensively performed according to the current time period, the energy savings status of the local system cell, the load situation and the energy savings status of the foreign system cell; and when the RAT1 judges that the conditions of waking up the local system cell are satisfied, the waking up recovery process of the local system cell is performed.
Step 307, the RAT1 performs the energy savings control judgment periodically, the energy savings control judgment is comprehensively performed according to the time period, the energy savings status of the local system cell, the load situation and the energy savings status of the foreign system cell; after the RAT1 judges that it requires to wake up the foreign system cell, if the local system cell is in the work status and overloaded seriously, and the neighboring cell of the foreign system is in the energy savings status, the DIRECT INFORMATION TRANSFER message (carrying the inter-RAT cell waking up indication, and the content of the information element SON Information Request is: the inter-RAT energy savings indication) is sent to the RAT2, for requesting to wake up the RAT2 cell.
Step 308, after the RAT2 receives the DIRECT INFORMATION TRANSFER message, the waking up recovery of the local system cell is performed; the RAT2 returns the DIRECT INFORMATION TRANSFER message carrying the information element SON Information Reply to the RAT1; if the process is successful, the information element SON Information Reply carries the processed cell energy savings status; and if the process fails, the information element SON Information Reply carries the failure cause: Cause.

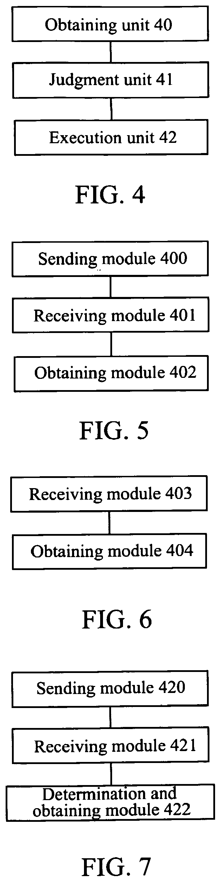

FIG. 4 is a structure diagram of an apparatus for energy savings control of an inter-RAT base station of the present invention. As shown in FIG. 4, the apparatus for the energy savings control of the inter-RAT base station of the present invention includes an obtaining unit 40, a judgment unit 41 and an execution unit 42; wherein, the obtaining unit 40 is configured to obtain the status information of the foreign system cell; the judgment unit 41 is configured to perform energy savings control judgment according to the status information of the foreign system cell and the status information of the local system cell which covers the same or neighboring area with the foreign system cell; and the execution unit 42 is configured to wake up the foreign system cell or the local system cell, or make the foreign system cell or the local system cell hibernate according to the judgment result of the judgment unit. The status information of the cell includes the load situation of the cell, whether to be in the energy savings status, and the energy savings status corresponding to the set time period. The judgment unit 41 performs the energy savings control judgment, including: judging that the local system cell enters into the hibernation status when determining that the local system cell is in the hibernation time period, the load of the foreign system cell which covers the same or neighboring area with the local system cell is not overloaded and the foreign system cell is not in the energy savings status; or, when determining that the load of the local system cell is overloaded and the foreign system cell which covers the same or neighboring area with the local system cell is in the hibernation status, then judging to wake up the foreign system cell; or, when determining that the load of the foreign system cell which covers the same or neighboring area with the local system cell is overloaded and the local system cell is in the hibernation status, then judging to wake up the local system cell.

FIG. 5 is a structure diagram of the obtaining unit of the present invention. As shown in FIG. 5, the obtaining unit 40 of the present invention includes a sending module 400, a receiving module 401 and an obtaining module 402; wherein, the sending module 400 is configured to send the inter-RAT cell information request message to the foreign system; the receiving module 401 is configured to receive the inter-RAT cell information response message of the foreign system; and the obtaining module 402 is configured to obtain the status information of the foreign system cell. The inter-RAT cell information request message and the inter-RAT cell information response message are the newly set dedicated message; or, the inter-RAT cell information request message and the inter-RAT cell information response message are carried by the eNB DIRECT INFORMATION TRANSFER message and the MME DIRECT INFORMATION TRANSFER message between the base station and the MME respectively, or carried by the eNB CONFIGURATION TRANSFER message and the MME CONFIGURATION TRANSFER message respectively; or, the inter-RAT cell information request message and the inter-RAT cell information response message are carried by the DIRECT INFORMATION TRANSFER message between the base station controller and the core network.

FIG. 6 is another structure diagram of the obtaining unit of the present invention. As shown in FIG. 6, the obtaining unit 40 of the present invention includes a receiving module 403 and an obtaining module 404; wherein, the receiving module 403 is configured to receive the inter-RAT cell information update message sent by the foreign system; and the obtaining module 404 is configured to obtain the status information of the foreign system cell. The inter-RAT cell information update message is the newly set dedicated message respectively; or, the inter-RAT cell information update message is carried by the MME DIRECT INFORMATION TRANSFER message or the MME CONFIGURATION TRANSFER message between the base station and the MME; or, the inter-RAT cell information update message is carried by the DIRECT INFORMATION TRANSFER message between the base station controller and the core network.

FIG. 7 is a structure diagram of an execution unit of the present invention. As shown in FIG. 7, the execution unit 42 of the present invention includes a sending module 420, a receiving module 421, and a determination and obtaining module 422; wherein, the sending module 420 is configured to send the inter-RAT cell waking up request message to the foreign system; the receiving module 421 is configured to receive the inter-RAT cell waking up response message of the foreign system; and the determination and obtaining module 422 is configured to determine that the foreign system cell is woke up and obtain the status information of the foreign system cell. The inter-RAT cell waking up request message and the inter-RAT cell waking up response message are the newly set dedicated messages respectively; or, the inter-RAT cell waking up request message and the inter-RAT cell waking up response message are carried by the eNB DIRECT INFORMATION TRANSFER message and the MME DIRECT INFORMATION TRANSFER message between the base station and the MME respectively, or carried by the eNB CONFIGURATION TRANSFER message and the MME CONFIGURATION TRANSFER message respectively; or, the inter-RAT cell waking up request message and the inter-RAT cell waking up response message are carried by the DIRECT INFORMATION TRANSFER message between the base station controller and the core network.

It should be understood by the skilled in the art that the apparatus for energy savings control of the inter-RAT base station as shown in FIG. 4 is configured to implement the previous method for energy savings control of the inter-RAT base station. The realization function of each process unit in FIG. 4 and the process modules shown in FIG. 5 to FIG. 7 can refer to the relevant description of the previous method for understanding. The function of each process unit and the process modules can be fulfilled by the programs running in the processor, and also can be fulfilled by the specific logical circuits.

The above description is only the preferred embodiments of the present invention and is not intended to limit the scope of the present invention.

## Claims

1. A method for energy savings control of an inter-RAT base station, comprising:
obtaining (101, 201, 301), by a local system, status information of a foreign system cell in a foreign system, performing (105, 106, 107, 205, 206, 207, 305, 306, 307) an energy savings control judgment according to the status information of the foreign system cell and the status information of a local system cell which covers the same or neighboring area with the foreign system cell, and waking up (108, 208, 308) the foreign system cell or the local system cell or making the foreign system cell or the local system cell hibernate according to a judgment result;
wherein the status information of the cell includes whether to be in an energy savings status;
wherein the local system cell belongs to a local system base station, the foreign system cell belongs to a foreign system base station, and both the local system base station and the foreign system base station are the inter-RAT base station to each other;
wherein, the obtaining the status information of the foreign system cell is:
the local system sending an inter-RAT cell information request message to the foreign system, and obtaining the status information of the foreign system cell from a received inter-RAT cell information response message of the foreign system;
wherein the inter-RAT cell information request message and the inter-RAT cell information response message are carried by a base station direct information transfer, eNB DIRECT INFORMATION TRANSFER, message and a mobility management entity direct information transfer, MME DIRECT INFORMATION TRANSFER, message between a base station and an MME respectively, or carried by a base station configuration transfer, eNB CONFIGURATION TRANSFER, message and an MME configuration transfer, MME CONFIGURATION TRANSFER, message respectively.

2. The method according to claim 1, wherein, the obtaining the status information of the foreign system cell is:
extracting the status information of the foreign system cell after receiving an inter-RAT cell information update message sent by the foreign system.

3. The method according to claim 2, wherein
the inter-RAT cell information update message is carried by an MME DIRECT INFORMATION TRANSFER message or an MME CONFIGURATION TRANSFER message between a base station and an MME;
or, the inter-RAT cell information update message is carried by a DIRECT INFORMATION TRANSFER message between a base station controller and a core network.

4. The method according to any one of claims 1-3, wherein, the status information of the cell further includes load situation of the cell, and an energy savings status corresponding to a set time period.

5. The method according to claim 4, wherein, the performing the energy savings control judgment is:
judging that the local system cell enters into a hibernation status when determining that the local system cell is in a hibernation time period, the load of the foreign system cell which covers the same or neighboring area with the local system cell is not overloaded and the foreign system cell is not in the energy savings status;
or, judging to wake up the foreign system cell when determining that the load of the local system cell is overloaded and the foreign system cell which covers the same or neighboring area with the local system cell is in the hibernation status;
or, judging to wake up the local system cell when determining that the load of the foreign system cell which covers the same or neighboring area with the local system cell is overloaded and the local system cell is in the hibernation status.

6. The method according to claim 5, wherein, the waking up the foreign system cell according to the judgment result is:
the local system sending an inter-RAT cell waking up request message to the foreign system, determining that the foreign system cell is woke up from a received inter-RAT cell waking up response message of the foreign system, and obtaining the status information of the foreign system cell.

7. The method according to claim 6, wherein, the inter-RAT cell waking up request message and the inter-RAT cell waking up response message are carried by an eNB DIRECT INFORMATION TRANSFER message and an MME DIRECT INFORMATION TRANSFER message between a base station and an MME respectively, or carried by an eNB CONFIGURATION TRANSFER message and an MME CONFIGURATION TRANSFER message respectively;
or, the inter-RAT cell waking up request message and the inter-RAT cell waking up response message are carried by a DIRECT INFORMATION TRANSFER message between a base station controller and a core network.

8. An apparatus for energy savings control of an inter-RAT base station in a local system, comprising an obtaining unit (40), a judgment unit (41) and an execution unit (42); wherein,
the obtaining unit (40) is configured to obtain status information of a foreign system cell in a foreign system;
the judgment unit (41) is configured to perform an energy savings control judgment according to the status information of the foreign system cell and the status information of a local system cell which covers the same or neighboring area with the foreign system cell; and
the execution unit (42) is configured to wake up the foreign system cell or the local system cell or making the foreign system cell or the local system cell hibernate according to a judgment result of the judgment unit (41);
wherein the status information of the cell includes whether to be in an energy savings status;
wherein the local system cell belongs to a local system base station, the foreign system cell belongs to a foreign system base station, and both the local system base station and the foreign system base station are the inter-RAT base station to each other;
wherein, the obtaining unit (40) further comprises a sending module (400), a receiving module (401) and an obtaining module (402); wherein,
the sending module (400) is configured to send an inter-RAT cell information request message to the foreign system;
the receiving module (401) is configured to receive an inter-RAT cell information response message of the foreign system; and
the obtaining module (402) is configured to obtain the status information of the foreign system cell;
wherein the inter-RAT cell information request message and the inter-RAT cell information response message are carried by a base station direct information transfer, eNB DIRECT INFORMATION TRANSFER, message and a mobility management entity direct information transfer, MME DIRECT INFORMATION TRANSFER, message between a base station and an MME respectively, or carried by a base station configuration transfer, eNB CONFIGURATION TRANSFER, message and an MME configuration transfer, MME CONFIGURATION TRANSFER, message respectively.

9. The apparatus according to claim 8, wherein, the obtaining unit (40) further comprises a receiving module (403) and an obtaining module (404); wherein,
the receiving module (403) is configured to receive an inter-RAT cell information update message sent by the foreign system; and
the obtaining module (404) is configured to obtain the status information of the foreign system cell.

10. The apparatus according to any one of claims 8-9, wherein, the status information of the cell further includes load situation of the cell, and an energy savings status corresponding to a set time period.

11. The apparatus according to claim 10, wherein, the judgment unit (41) further configured to,
judge that the local system cell enters into a hibernation status when determining that the local system cell is in a hibernation time period, the load of the foreign system cell which covers the same or neighboring area with the local system cell is not overloaded and the foreign system cell is not in the energy savings status;
or, judge to wake up the foreign system cell when determining that the load of the local system cell is overloaded and the foreign system cell which covers the same or neighboring area with the local system cell is in the hibernation status;
or, judge to wake up the local system cell when determining that the load of the foreign system cell which covers the same or neighboring area with the local system cell is overloaded and the local system cell is in the hibernation status.

12. The apparatus according to claim 11, wherein, the execution unit (42) further comprises a sending module (420), a receiving module (421) and a determination and obtaining module (422); wherein,
the sending module (420) is configured to send an inter-RAT cell waking up request message to the foreign system;
the receiving module (421) is configured to receive an inter-RAT cell waking up response message of the foreign system; and
the determination and obtaining module (422) is configured to determine that the foreign system cell is woke up and obtain the status information of the foreign system cell.

## Patentansprüche

1. Verfahren für Energieeinsparungssteuerung einer Zwischen-RAT-Basisstation, das Folgendes umfasst:
Erhalten (101, 201, 301), durch ein lokales System, von Statusinformationen einer Fremdsystemzelle in einem Fremdsystem, Durchführen (105, 106, 107, 205, 206, 207, 305, 306, 307) einer Energieeinsparungssteuerungsbewertung gemäß den Statusinformationen der Fremdsystemzelle und den Statusinformationen einer lokalen Systemzelle, die denselben oder den Nachbarbereich mit der Fremdsystemzelle abdeckt, und Aufwecken (108, 208, 308) der Fremdsystemzelle oder der lokalen Systemzelle oder Schalten der Fremdsystemzelle oder der lokalen Systemzelle auf Standby, gemäß einem Bewertungsergebnis;
wobei die Statusinformationen der Zelle beinhalten, ob sie sich in einem Energieeinsparstatus befinden soll;
wobei die lokale Systemzelle zu einer lokalen Basisstation gehört, die Fremdsystemzelle zu einer Fremdsystembasisstation gehört und sowohl die lokale Systembasisstation als auch die Fremdsystembasisstation Zwischen-RAT-Basisstationen zueinander sind;
wobei das Erhalten der Statusinformationen der Fremdsystemzelle Folgendes ist:
Senden einer Zwischen-RAT-Zellinformationsanforderungsnachricht an das Fremdsystem und Erhalten der Statusinformationen der Fremdsystemzelle von einer empfangenen Zwischen-RAT-Zelleninformationsantwortnachricht des Fremdsystems durch das lokale System;
wobei die Zwischen-RAT-Zelleninformationsanforderungsnachricht und die Zwischen-RAT-Zelleninformationsantwortnachricht durch eine Nachricht einer Direktinformationsübertragung einer Basisstation, eNB DIRECT INFORMATION TRANSFER, und eine Nachricht einer Direktinformationsübertragung einer Mobility Management Entity, MME DIRECT INFORMATION TRANSFER, zwischen einer Basisstation bzw. einer MME, oder durch eine Nachricht einer Konfigurationsübertragung einer Basisstation, eNB CONFIGURATION TRANSFER, bzw. einer Nachricht einer MME-Konfigurationsübertragung, MME CONFIGURATION TRANSFER, getragen werden.

2. Verfahren nach Anspruch 1, wobei das Erhalten der Statusinformationen der Fremdsystemzelle Folgendes ist:
Extrahieren der Statusinformationen der Fremdsystemzelle nach Empfangen einer Zwischen-RAT-Zelleninformationsaktualisierungsnachricht, die durch das Fremdsystem gesendet ist.

3. Verfahren nach Anspruch 2, wobei
die Zwischen-RAT-Zelleninformationsaktualisierungsnachricht durch eine Nachricht einer MME DIRECT INFORMATION TRANSFER oder eine Nachricht einer MME CONFIGURATION TRANSFER zwischen einer Basisstation und einer MME getragen ist;
oder, die Zwischen-RAT-Zelleninformationsaktualisierungsnachricht durch eine Nachricht einer DIRECT INFORMATION TRANSFER zwischen einer Basisstationssteuerung und einem Kernnetzwerk getragen ist.

4. Verfahren nach einem der Ansprüche 1-3, wobei die Statusinformationen der Zelle ferner eine Lastsituation der Zelle beinhaltet und ein Energieeinsparungsstatus einem festgelegten Zeitraum entspricht.

5. Verfahren nach Anspruch 4, wobei das Ausführen der Energieeinsparungssteuerungsbewertung Folgendes ist:
Bewerten, dass die lokale Systemzelle in einen Standby-Status übergeht, wenn bestimmt wird, dass sich die lokale Systemzelle in einem Standby-Zeitraum befindet, wobei die Last der Fremdsystemzelle, die denselben oder den Nachbarbereich mit der lokalen Systemzelle abdeckt nicht überlastet ist und die Fremdsystemzelle nicht in dem Energieeinsparungsstatus ist;
oder Bewerten, um die Fremdsystemzelle aufzuwecken, wenn bestimmt wird, dass die Last der lokalen Systemzelle überlastet ist und die Fremdsystemzelle, die denselben oder den Nachbarbereich wie die lokale Systemzelle abdeckt, in dem Standby-Status ist;
oder Bewerten, um die lokale Systemzelle aufzuwecken, wenn bestimmt wird, dass die Last der Fremdsystemzelle, die denselben oder den Nachbarbereich mit der lokalen Systemzelle abdeckt, überlastet ist und die lokale Systemzelle in dem Standby-Status ist.

6. Verfahren nach Anspruch 5, wobei das Aufwecken der Fremdsystemzelle gemäß der Bewertung Folgendes ist:
Senden einer Zwischen-RAT-Zellenaufweckanforderungsnachricht durch das lokale System an das Fremdsystem, Bestimmen, aus einer empfangenen Zwischen-RAT-Zellenaufweckantwortnachricht des Fremdsystems, dass die Fremdsystemzelle aufgeweckt ist, und Erhalten der Statusinformationen der Fremdsystemzelle.

7. Verfahren nach Anspruch 6, wobei die Zwischen-RAT-Zellenaufweckanforderungsnachricht und die Zwischen-RAT-Zellenaufweckantwortnachricht durch eine Nachricht einer eNB DIRECT INFORMATION TRANSFER und eine Nachricht einer MME DIRECT INFORMATION TRANSFER zwischen einer Basisstation bzw. einer MME getragen werden oder durch eine Nachricht einer eNB CONFIGURATION TRANSFER bzw. eine Nachricht einer MME CONFIGURATION TRANSFER getragen werden;
oder die Zwischen-RAT-Zellenaufweckanforderungsnachricht und die Zwischen-RAT-Zellenaufweckantwortnachricht durch eine Nachricht einer DIRECT INFORMATION TRANSFER zwischen einer Basisstationssteuerung und einem Kernnetzwerk getragen werden.

8. Vorrichtung für Energieeinsparungssteuerung einer Zwischen-RAT-Basisstation in einem lokalen System, die eine Erhaltungseinheit (40), eine Bewertungseinheit (41) und eine Ausführeinheit (42) umfasst; wobei,
die Erhaltungseinheit (40) dazu konfiguriert ist, Statusinformationen einer Fremdsystemzelle in einem Fremdsystem zu erhalten;
die Bewertungseinheit (41) dazu konfiguriert ist, eine Energieeinsparungssteuerbewertung gemäß den Statusinformationen der Fremdsystemzelle und den Statusinformationen einer lokalen Systemzelle zu steuern, das denselben oder den Nachbarbereich mit der Fremdsystemzelle abdeckt; und
die Ausführeinheit (42) dazu konfiguriert ist, die Fremdsystemzelle oder die lokale Systemzelle aufzuwecken oder die Fremdsystemzelle oder die lokale Systemzelle in den Standby-Status zu versetzen, gemäß einem Bewertungsergebnis der Bewertungseinheit (41);
wobei die Statusinformationen der Zelle beinhalten, ob sie sich in einem Energieeinsparungsstatus befinden sollte;
wobei die lokale Systemzelle zu einer lokalen Systembasisstation gehört, die Fremdsystemzelle zu einer Fremdsystembasisstation gehört und sowohl die lokale Systembasisstation als auch die Fremdsystembasisstation die Zwischen-RAT-Basisstation zueinander sind;
wobei die Erhaltungseinheit (40) ferner ein Sendemodul (400), ein Empfangsmodul (401) und ein Erhaltungsmodul (402) umfasst; wobei,
das Sendemodul (400) dazu konfiguriert ist, eine Zwischen-RAT-Zelleninformationsanforderungsnachricht an das Fremdsystem zu senden;
das Empfangsmodul (401) dazu konfiguriert ist, eine Zwischen-RAT-Zelleninformation der Fremdsystemzelle zu erhalten; und das Erhaltungsmodul (402) dazu konfiguriert ist, die Statusinformationen der Fremdsystemzelle zu erhalten;
wobei die Zwischen-RAT-Zelleninformationsanforderungsnachricht und die Zwischen-RAT-Zelleninformationsantwortnachricht durch eine Nachricht einer direkten Informationsübertragung einer Basisstation, eNB DIRECT INFORMATION TRANSFER, und eine Nachricht einer direkten Informationsübertragung einer Mobility Management Entity, MME DIRECT INFORMATION TRANSFER, zwischen einer Basisstation bzw. einer MME getragen sind oder durch eine Nachricht einer Konfigurierungsübertragung einer Basisstation, eNB CONFIGURATION TRANSFER, bzw. eine Nachricht einer Konfigurationsübertragung einer MME, MME CONFIGURATION TRANSFER, getragen sind.

9. Vorrichtung nach Anspruch 8, wobei die Erhaltungseinheit (40) ferner ein Empfangsmodul (403) und ein Erhaltungsmodul (404) umfasst; wobei,
das Empfangsmodul (403) dazu konfiguriert ist, eine Zwischen-RAT-Zelleninformationsaktualisierungsnachricht zu empfangen, die durch das Fremdsystem gesendet ist; und
das Erhaltungsmodul (404) dazu konfiguriert ist, die Statusinformationen der Fremdsystemzelle zu erhalten.

10. Vorrichtung nach einem der Ansprüche 8-9, wobei die Statusinformationen der Zelle ferner eine Lastsituation der Zelle beinhalten und ein Energieeinsparungsstatus einem festgelegten Zeitraum entspricht.

11. Vorrichtung nach Anspruch 10, wobei die Bewertungseinheit (41) ferner zu Folgendem konfiguriert ist,
Bewerten, dass die lokale Systemzelle in einen Standby-Status übergeht, wenn bestimmt wird, dass die lokale Systemzelle in einem Standby-Zeitraum ist, die Last der Fremdsystemzelle, die denselben oder den Nachbarbereich mit der lokalen Systemzelle abdeckt, nicht überlastet ist und die Fremdsystemzelle nicht in dem Energieeinsparungsstatus ist;
oder Bewerten, um die Fremdsystemzelle aufzuwecken, wenn bestimmt ist, dass die Last der lokalen Systemzelle überlastet ist und die Fremdsystemzelle, die denselben oder den Nachbarbereich mit der lokalen Systemzelle abdeckt, im Standby-Status ist;
oder Bewerten, um die lokale Systemzelle aufzuwecken, wenn bestimmt ist, dass die Last der Fremdsystemzelle, die denselben oder den Nachbarbereich mit der lokalen Systemzelle abdeckt, überlastet ist und die lokale Systemzelle in dem Standby-Status ist.

12. Vorrichtung nach Anspruch 11, wobei die Ausführeinheit (42) ferner ein Sendemodul (420), ein Empfangsmodul (421) und ein Bestimmungs- und Erhaltungsmodul (422) umfasst; wobei,
das Sendemodul (420) dazu konfiguriert ist, eine Zwischen-RAT-Zellenaufweckanforderungsnachricht an das Fremdsystem zu senden;
das Empfangsmodul (421) dazu konfiguriert ist, eine Zwischen-RAT-Zellenaufweckantwortnachricht des Fremdsystems zu empfangen; und
das Bestimmungs- und Erhaltungsmodul (422) dazu konfiguriert ist, zu bestimmen, dass die Fremdsystemzelle aufgeweckt ist, und die Statusinformationen der Fremdsystemzelle zu erhalten.

## Revendications

1. Procédé de commande d'économie d'énergie d'une station de base inter-RAT, comprenant :
l'obtention (101, 201, 301), par un système local, des informations d'état d'une cellule de système étranger dans un système étranger, la réalisation (105, 106, 107, 205, 206, 207, 305, 306, 307) d'une évaluation de commande d'économie d'énergie en fonction des informations d'état de la cellule de système étranger et des informations d'état d'une cellule de système local couvrant la même zone ou une zone voisine de la cellule de système étrangère, et la réactivation (108, 208, 308) de la cellule de système étranger ou de la cellule de système local ou la mise en veille prolongée de la cellule de système étranger ou de la cellule de système local en fonction d'un résultat d'évaluation ;
dans lequel les informations d'état de la cellule incluent si elle doit ou non être dans un état d'économie d'énergie ;
dans lequel la cellule de système local appartient à une station de base du système local, la cellule de système étranger appartient à une station de base du système étranger, et la station de base du système local et la station de base du système étranger forment la station de base inter-RAT l'une par rapport à l'autre ;
dans lequel, l'obtention des informations d'état de la cellule de système étranger consiste à :
envoyer, par le système local, un message de demande d'informations de cellule inter-RAT au système étranger et obtenir les informations d'état de la cellule de système étranger à partir d'un message de réponse d'informations de cellule inter-RAT reçu du système étranger ;
dans lequel le message de demande d'informations de cellule inter-RAT et le message de réponse d'informations de cellule inter-RAT sont acheminés par un transfert direct d'informations de station de base, un message de TRANSFERT DIRECT D'INFORMATIONS DE eNB, et un transfert direct d'informations d'entité de gestion de mobilité, un message de TRANSFERT DIRECT D' INFORMATIONS DE MME, entre une station de base et une MME, respectivement, ou acheminés par un transfert de configuration de station de base, un message de TRANSFERT DE CONFIGURATION DE eNB, et un transfert de configuration de MME, un message de TRANSFERT DE CONFIGURATION DE MME, respectivement.

2. Procédé selon la revendication 1, dans lequel l'obtention des informations d'état de la cellule de système étranger consiste à :
extraire des informations d'état de la cellule de système étranger après la réception d'un message de mise à jour des informations de cellule inter-RAT envoyé par le système étranger.

3. Procédé selon la revendication 2, dans lequel le message de mise à jour d'informations de cellule inter-RAT est acheminé par un message de TRANSFERT DIRECT D' INFORMATIONS DE MME ou un message de TRANSFERT DE CONFIGURATION DE MME entre une station de base et une MME ;
ou, le message de mise à jour d'informations de cellule inter-RAT est acheminé par un message de TRANSFERT DIRECT D' INFORMATIONS entre un dispositif de commande de station de base et un réseau central.

4. Procédé selon l'une quelconque des revendications 1 à 3, dans lequel, l'information d'état de la cellule comprend en outre une situation de charge de la cellule et un état d'économie d'énergie correspondant à une période déterminée.

5. Procédé selon la revendication 4, dans lequel, la réalisation de l'évaluation de commande d'économie d'énergie consiste à :
évaluer si la cellule de système local entre dans un état de veille prolongée lorsqu'il est déterminé que la cellule de système local se trouve dans une période de veille prolongée, la charge de la cellule de système étranger qui couvre la même zone ou une zone voisine de la cellule de système local n'est pas surchargée et la cellule de système étranger n'est pas dans l'état d'économie d'énergie ;
ou, évaluer si la réactivation de la cellule de système étranger est nécessaire lorsqu'il est déterminé que la charge de la cellule de système local est surchargée et que la cellule de système étranger qui couvre la même zone ou une zone voisine de la cellule de système local est dans l'état de veille prolongée ;
ou, évaluer si la réactivation de la cellule de système local est nécessaire lorsqu'il est déterminé que la charge de la cellule de système étranger qui couvre la même zone ou une zone voisine de la cellule de système local est surchargée et que la cellule de système local est dans l'état de veille prolongée.

6. Procédé selon la revendication 5, dans lequel la réactivation de la cellule de système étranger selon le résultat de l'évaluation consiste à :
envoyer, par le système local, un message de demande de réactivation de cellule inter-RAT au système étranger, déterminer que la cellule de système étranger est réactivée à partir d'un message de réponse de réactivation de cellule inter-RAT reçu du système étranger et obtenir les informations d'état de cellule de système étranger.

7. Procédé selon la revendication 6, dans lequel le message de demande de réactivation de cellule inter-RAT et le message de réponse de réactivation de cellule inter-RAT sont acheminés par un message de TRANSFERT DIRECT D'INFORMATIONS DE eNB et un message de TRANSFERT DIRECT D'INFORMATIONS DE MME entre une station de base et une MME respectivement, ou acheminés par un message de TRANSFERT DE CONFIGURATION DE eNB et un message de TRANSFERT DE CONFIGURATION DE MME respectivement ;
ou, le message de demande de réactivation de cellule inter-RAT et le message de réponse de réactivation de cellule inter-RAT sont acheminés par un message de TRANSFERT DIRECT D'INFORMATIONS entre un dispositif de commande de station de base et un réseau central.

8. Appareil de commande d'économie d'énergie d'une station de base inter-RAT dans un système local, comprenant une unité d'obtention (40), une unité d'évaluation (41) et une unité d'exécution (42) ; dans lequel,
l'unité d'obtention (40) est configurée pour obtenir les informations d'état d'une cellule dans un système étranger ;
l'unité d'évaluation (41) est configurée pour réaliser une évaluation de commande d'économie d'énergie en fonction des informations d'état de la cellule de système étranger et des informations d'état d'une cellule de système local qui couvre la même zone ou une zone voisine de la cellule de système étranger ; et
l'unité d'exécution (42) est configurée pour réactiver la cellule de système étranger ou la cellule de système local ou pour rendre la cellule de système étranger ou la cellule de système local en état de veille prolongée conformément à un résultat d'évaluation de l'unité de d'évaluation (41) ;
dans lequel les informations d'état de la cellule incluent si elle doit ou non être dans un état d'économie d'énergie ;
dans lequel la cellule de système local appartient à une station de base du système local, la cellule de système étranger appartient à une station de base du système étranger, et la station de base du système local et la station de base du système étranger forment la station de base inter-RAT l'une par rapport à l'autre ;
dans lequel, l'unité d'obtention (40) comprend en outre un module d'envoi (400), un module de réception (401) et un module d'obtention (402) ; dans lequel,
le module d'envoi (400) est configuré pour envoyer un message de demande d'informations de cellule inter-RAT au système étranger ;
le module de réception (401) est configuré pour recevoir un message de réponse d'informations de cellule inter-RAT du système étranger ; et
le module d'obtention (402) est configuré pour obtenir les informations d'état de la cellule de système étranger ;
dans lequel le message de demande d'informations de cellule inter-RAT et le message de réponse d'informations de cellule inter-RAT sont acheminés par un transfert direct d'informations de station de base, un message de TRANSFERT DIRECT D'INFORMATIONS DE eNB, et un transfert direct d'informations d'entité de gestion de mobilité, un message de TRANSFERT DIRECT D'INFORMATIONS DE MME, entre une station de base et une MME, respectivement, ou acheminés par un transfert de configuration de station de base, un message de TRANSFERT DE CONFIGURATION DE eNB, et un transfert de configuration de MME, un message de TRANSFERT DE CONFIGURATION DE MME, respectivement.

9. Appareil selon la revendication 8, dans lequel l'unité d'obtention (40) comprend en outre un module de réception (403) et un module d'obtention (404) ; dans lequel,
le module de réception (403) est configuré pour recevoir un message de mise à jour d'informations de cellule inter-RAT envoyé par le système étranger ; et
le module d'obtention (404) est configuré pour obtenir les informations d'état de la cellule de système étranger.

10. Appareil selon l'une quelconque des revendications 8 à 9, dans lequel l'information d'état de la cellule comprend en outre une situation de charge de la cellule et un état d'économie d'énergie correspondant à une période déterminée.

11. Appareil selon la revendication 10, dans lequel l'unité d'évaluation (41) est en outre configurée pour,
évaluer si la cellule de système local entre en état de veille prolongée lorsqu'il est déterminé que la cellule de système local se trouve dans une période de veille prolongée, la charge de la cellule de système étranger qui couvre la même zone ou une zone voisine de la cellule de système local n'est pas surchargée et la cellule de système étranger n'est pas dans l'état d'économie d'énergie ;
ou, évaluer si la réactivation de la cellule de système étranger est nécessaire lorsqu'il est déterminé que la charge de la cellule de système local est surchargée et que la cellule de système étranger qui couvre la même zone ou une zone voisine de la cellule de système local est dans l'état de veille prolongée ;
ou, évaluer si la réactivation de la cellule de système local est nécessaire lorsqu'il est déterminé que la charge de la cellule de système étranger qui couvre la même zone ou une zone voisine de la cellule de système local est surchargée et que la cellule de système local est dans l'état de veille prolongée.

12. Appareil selon la revendication 11, dans lequel l'unité d'exécution (42) comprend en outre un module d'envoi (420), un module de réception (421) et un module de détermination et d'obtention (422) ; dans lequel,
le module d'envoi (420) est configuré pour envoyer un message de demande de réactivation de cellule inter-RAT au système étranger ;
le module de réception (421) est configuré pour recevoir un message de réponse de réactivation de cellule inter-RAT du système étranger ; et
le module de détermination et d'obtention (422) est configuré pour déterminer que la cellule de système étranger est réactivée et obtenir les informations d'état de la cellule de système étranger.
